# EUROPEAN PATENT SPECIFICATION

(11) **EP 2 797 468 B1**
(45) Date of publication and mention of the grant of the patent: **25.11.2015**
(21) Application number: 12794930.3
(22) Date of filing: 26.11.2012
(51) Int. Cl.: A47J 31/057

(54) **A HOT BEVERAGE PREPARATION MACHINE**
MASCHINE ZUR ZUBEREITUNG HEISSER GETRÄNKE
MACHINE DE PRÉPARATION DE BOISSONS CHAUDES

(30) Priority: 26.12.2011 TR 201112959
(43) Date of publication of application: 05.11.2014
(73) Proprietor: Arçelik Anonim Sirketi, 34950 Istanbul (TR)
(72) Inventor: COBAN, Omer Burak, 34950 Istanbul (TR); DAVASLIGIL, Sena, 34950 Istanbul (TR); GERZELI, Ismail, 34950 Istanbul (TR); HASANREISOGLU, Ali Levent, 34950 Istanbul (TR); VATANSEVER, Celal, 34950 Istanbul (TR)
(86) International application number: PCT/EP2012/073548
(87) International publication number: WO 2013/097999

(56) References cited:
- WO-A1-2004/026088
- WO-A2-2009/035939
- DE-U1- 29 704 023
- US-A1- 2005 145 112

## Description

The present invention relates to a hot beverage preparation machine comprising a control unit.

In hot beverage preparation machines, the water filled into the water container is heated by means of a water heater and is transferred to the brewing chamber containing raw material of the beverage to be prepared. The brewing process is performed in the brewing chamber as the result of the interaction of the beverage raw material and water. The brewed beverage is transferred into a pot afterwards and served.

In the state of the art hot beverage making machines explained in the International Patent Application No. WO2004008922 and the German Patent Application No. DE19857165, the brewing chamber and the pot are positioned to be one above the other and the water reservoir is side by side with the brewing chamber and the pot.

In another state of the art embodiment, the German Utility Model Document No. DE29920890, the hot beverage preparation machine explained is controlled by means of a button disposed on the body, below the water reservoir. Further hot beverage preparation devices are disclosed in US 2005/0145112 and WO 2004/026088.

The aim of the present invention is the realization of a hot beverage preparation machine that be controlled easily and safely.

In the hot beverage preparation machine realized in order to attain the aim of the present invention and explicated in the claims, at one side of the body, the brewing chamber is disposed at the upper side and the pot below and the water container is disposed on a platform at the other side of the body. The hot beverage preparation machine is controlled by using a control unit disposed on the body, between the brewing chamber and the pot. Thus, the probability of the control unit being damaged by water or beverage spilled thereon during utilization of the hot beverage preparation machine is minimized.

The water in the water container is heated by means of a water heater. The water heated in the water container is transferred into the brewing chamber by means of a transfer mechanism.

In an embodiment of the present invention, the control unit comprises at least one button providing it to be operated and stopped, and selections relating to beverage preparation steps to be made. Thus, the user is provided to easily control the beverage preparation processes.

In an embodiment of the present invention, the control unit comprises a display providing the data relating to the operation of hot beverage preparation machine to be shown to the user.

In an embodiment of the present invention, a connector is disposed on the platform providing the water container to be energized when placed on the platform.

According to the present invention, the water container can be carried easily by means of the handle disposed thereon. The water container furthermore comprises an orifice arranged at the upper side, enabling to easily pour out the water within when the water container is tilted during service. Thus, when the user desires to take the water container from the platform to use in serving water, it is possible to hold from the handle and pour the water flowing out from the orifice into cups, different containers etc by tilting the water container.

In an embodiment of the present invention, the pot is heated by a pot heater disposed on the body, at the base of the housing. Thus, the beverage transferred from the brewing chamber into the pot is prevented from getting cold.

In an embodiment of the present invention, access to the brewing chamber is provided by means of a cover disposed at its ceiling, hinged from one side to the brewing chamber, that can be opened by being rotated. When beverage raw material is desired to be loaded into the brewing chamber, the beverage raw material is filled by opening the cover and afterwards when hot water is transferred into the brewing chamber by closing the cover, a closed volume is formed wherein brewing can be performed effectively.

In an embodiment of the present invention, a strainer is disposed inside the brewing chamber. By means of the strainer, the particles of the beverage raw material placed into the brewing chamber is prevented from being transferred into the pot.

In the hot beverage preparation machine of the present invention, the risk of damaging the control unit is minimized thus utilization of the hot beverage preparation machine safely and for a long time is possible.

The hot beverage preparation machine realized in order to attain the aim of the present invention is illustrated in the attached figures, where:

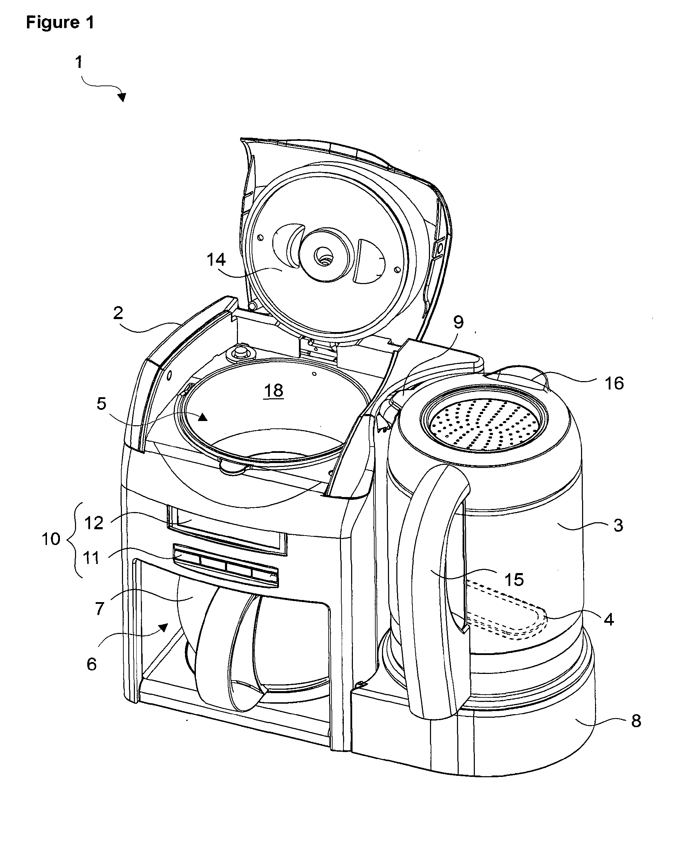

Figure 1 - is the perspective view of a hot beverage preparation machine.

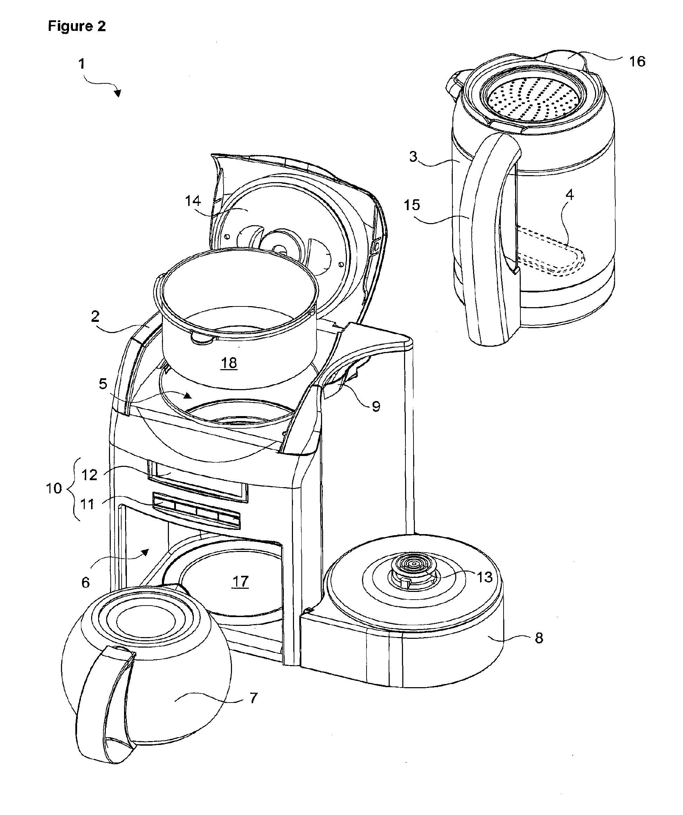

Figure 2 - is the exploded perspective view of a hot beverage preparation machine.

The elements illustrated in the figures are numbered as follows:
1. Hot beverage preparation machine
2. Body
3. Water container
4. Water heater
5. Brewing chamber
6. Housing
7. Pot
8. Platform
9. Transfer mechanism
10. Control unit
11. Button
12. Display
13. Connector
14. Cover
15. Handle
16. Orifice
17. Pot heater
18. Strainer

The hot beverage preparation machine (1) comprises:
- a body (2),
- a water container (3) wherein water is filled,
- a water heater (4) that provides the water in the water container (3) to be heated,

- a brewing chamber (5) wherein the raw material of the beverage to be prepared is put and whereto the water heated in the water container (3) is transferred, wherein the brewing process is performed as the result of the interaction of the beverage raw material and water,
- a housing (6) situated on the body (2), under the brewing chamber (5),
- a pot (7) placed into the housing (6), the top surface being at least partially open, whereto the beverage brewed in the brewing chamber (5) is transferred.

The hot beverage preparation machine (1) of the present invention comprises:
- a platform (8) positioned to be next to the brewing chamber (5) and the pot (7), positioned one over the other on the body (2), whereon the water container (3) is placed, enabling the water container (3) to be held next to the brewing chamber (5) and the pot (7),
- a connector (13) disposed on the platform (8), enabling energy transfer to the water container (3) for heating the water inside the water container (3) and
- a transfer mechanism (9) providing the water heated in the water container (3) to be transferred to the brewing chamber (5) while the water container (3) is on the platform (8) and
- a control unit (10) disposed on the body (2) between the brewing chamber (5) and the pot (7), providing the controlling of beverage preparation processes and/or informing the user about the state relating to the beverage preparation.

Thus, not only the hot beverage preparation machine (1) is provided to be controlled easily by the user but also the control unit (10) is prevented from being damaged by contacting water or beverage during utilization of the hot beverage preparation machine (1).

In an embodiment of the present invention, the control unit (10) comprises at least one button (11) providing beverage preparation processes to be controlled. Thus, the hot beverage preparation machine (1) is provided to be controlled easily.

In an embodiment of the present invention, the control unit (10) comprises at least one display (12) providing the user to be informed on the state relating to the beverage preparation. Consequently, the user is provided to be informed about the course of beverage preparation process.

In the hot beverage preparation machine (1) of the present invention, when hot beverage is desired to be prepared, water is filled into the water container (3) and placed on the platform (8) to be seated on the connector (13). The beverage preparation process is started by means of the button (11). The water in the water container (3) is provided to be heated by operating the water container (3) with the energy transferred from the connector (13). The heated water is transferred into the brewing chamber (5) by means of the transfer mechanism (9). After the brewing process is completed in the brewing chamber (5), the beverage is ready to serve by being transferred into the pot (7) disposed under the brewing chamber (5) and the information that beverage is ready is given to the user by means of the display (12). When the beverage is to be served, the pot (7) is taken from inside the housing (6) and taken to the place of service. In the case the beverage is desired to be served by diluting, it is possible to take the pot (7) together with the water container (3) from the platform (8) and carry to the place of service.

In an embodiment of the present invention, the hot beverage preparation machine (1) comprises a cover (14) enabling access into the brewing chamber (5). Thus, it is possible to load or unload beverage raw material from the brewing chamber (5).

The water container (3) comprises a handle (15) enabling it to be grabbed by the user for lifting from the platform (8) and an orifice (16) enabling water to be poured out when desired to be used separately for the aim of service by taking off from the platform (8). Consequently, the water container (3) both provides water to be heated and transferred to the brewing chamber (5) but can also be used for serving by being taken off the platform (8).

In an embodiment of the present invention, the hot beverage preparation machine (1) comprises a pot heater (17) providing the beverage in the pot (7) to be kept warm.. Accordingly, the beverage is provided to be kept warm as long as it stays in the pot (7) prior to service.

In an embodiment of the present invention, the hot beverage preparation machine (1) comprises a strainer (18) placed inside the brewing chamber (5), wherein beverage raw material is put, its base configured to be perforated, providing the beverage to be transferred to the pot (7) by straining the beverage raw material particles. Consequently, beverage raw material particles are prevented from being present in the beverage transferred into the pot (7).

By means of the present invention, a multi-functional hot beverage preparation machine (1) is realized that occupies less space and wherein the water container (3) can also be used for serving.

It is to be understood that the present invention is not limited to the embodiments disclosed above and a person skilled in the art can easily introduce different embodiments. These should be considered within the scope of the protection postulated by the claims of the present invention.

## Claims

1. A hot beverage preparation machine (1) comprising
- a body (2),
- a water container (3) wherein water is filled,
- a water heater (4) that provides the water in the water container (3) to be heated,
- a brewing chamber (5) wherein the raw material of the beverage to be prepared is put and whereto the water heated in the water container (3) is transferred, wherein the brewing process is performed as the result of the interaction of the beverage raw material and water,
- a housing (6) situated on the body (2), under the brewing chamber (5),
- a pot (7) placed into the housing (6), the top surface being at least partially open, whereto the beverage brewed in the brewing chamber (5) is transferred,
- a platform (8) positioned to be next to the brewing chamber (5) and the pot (7), positioned one over the other on the body (2), whereon the water container (3) is placed, enabling the water container (3) to be held next to the brewing chamber (5) and the pot (7),
- a transfer mechanism (9) providing the water heated in the water container (3) to be transferred to the brewing chamber (5) while the water container (3) is on the platform (8),
- a control unit (10) disposed on the body (2), between the brewing chamber (5) and the pot (7), providing the controlling of beverage preparation processes and/or informing the user about the state relating to the beverage preparation,
- a connector (13) disposed on the platform (8), enabling energy transfer to the water container (3) for heating the water inside the water container (3), wherein the water container (3) has a handle (15) enabling it to be grabbed by the user for lifting from the platform (8) and an orifice (16) enabling water to be poured out when desired to be used separately for the aim of service by taking off from the platform (8).

2. A hot beverage preparation machine (1) as in Claim 1, **characterized by** the control unit (10) comprising at least one button (11) providing the controlling of the beverage preparation processes.

3. A hot beverage preparation machine (1) as in Claim 1 or 2, **characterized by** the control unit (10) comprising at least one display (12) providing the user to be informed about the state relating to the beverage preparation.

4. A hot beverage preparation machine (1) as in any one of the above Claims, **characterized by** a cover (14) enabling access into the brewing chamber (5).

5. A hot beverage preparation machine (1) as in any one of the above Claims, **characterized by** a pot heater (17) providing the beverage in the pot (7) to be kept warm.

6. A hot beverage preparation machine (1) as in any one of the above Claims, **characterized by** a strainer (18) placed inside the brewing chamber (5), wherein beverage raw material is put, its base configured to be perforated, providing the beverage to be transferred to the pot (7) by straining the beverage raw material particles.

## Patentansprüche

1. Heißgetränkzubereitungsmaschine (1), umfassend
- einen Gehäusekörper (2),
- einen Wasserbehälter (3), in den Wasser gefüllt ist,
- eine Wasserheizeinrichtung (4), die dafür sorgt, dass der Wasserbehälter (3) erwärmt wird,
- eine Brühkammer (5), in die Rohmaterial für das zuzubereitende Getränk gegeben wird und in die das im Wasserbehälter (3) erwärmte Wasser übertragen wird, wobei der Brühprozess als Ergebnis der Interaktion des Getränkerohmaterials und von Wasser durchgeführt wird,
- ein Gehäuse (6), das am Gehäusekörper (2) unter der Brühkammer (5) angeordnet ist,
- einen Topf (7), der in das Gehäuse (6) gesetzt wird und dessen Oberfläche wenigstens teilweise offen ist und an den das in der Brühkammer (5) gebrühte Getränk übertragen wird,
- eine Plattform (8), die derart angeordnet ist, dass sie neben der Brühkammer (5) und dem Topf (7) angeordnet ist, die übereinander am Gehäusekörper (2) angeordnet sind, und auf der der Wasserbehälter (3) angeordnet wird, so dass der Wasserbehälter (3) neben der Brühkammer (5) und dem Topf (7) gehalten werden kann,
- einen Übertragungsmechanismus (9), der dafür sorgt, dass das im Wasserbehälter (3) erwärmte Wasser an die Brühkammer (5) übertragen wird, während der Wasserbehälter (3) auf der Plattform (8) ist,
- eine Steuereinheit (10), die am Gehäusekörper (2) zwischen der Brühkammer (5) und dem Topf (7) angeordnet ist und das Steuern des Getränkezubereitungsprozesses und/oder das Informieren des Benutzers über den Zustand bezüglich der Getränkezubereitung ermöglicht,
- einen Steckverbinder (13), der an der Plattform (8) angeordnet ist und eine Energieübertragung an den Wasserbehälter (3) zum Erwärmen des Wasser im Wasserbehälter (3) ermöglicht,
wobei der Wasserbehälter (3) einen Griff (15), der es ihm ermöglicht, von dem Benutzer ergriffen zu werden, um von der Plattform (8) abgehoben zu werden, und eine Öffnung (16) aufweist, die es ermöglicht, Wasser bei Bedarf auszugießen, um es durch Entfernen von der Plattform (8) separat zu Servicezwecken zu verwenden.

2. Heißgetränkzubereitungsmaschine (1) nach Anspruch 1, **dadurch gekennzeichnet, dass** die Steuereinheit (10) wenigstens eine Taste (11) umfasst, die das Steuern des Getränkezubereitungsprozesses ermöglicht.

3. Heißgetränkzubereitungsmaschine (1) nach Anspruch 1, **dadurch gekennzeichnet, dass** die Steuereinheit (10) wenigstens eine Anzeige (12) umfasst, die das Informieren des Benutzers bezüglich des Zustands der Getränkezubereitung ermöglicht.

4. Heißgetränkzubereitungsmaschine (1) nach einem der vorangehenden Ansprüche, **dadurch gekennzeichnet, dass** eine Abdeckung (14) Zugriff auf die Brühkammer (5) ermöglicht.

5. Heißgetränkzubereitungsmaschine (1) nach einem der vorangehenden Ansprüche, **gekennzeichnet durch** eine Topfheizeinrichtung (17), die dafür sorgt, dass das Getränk im Topf (7) warm gehalten wird.

6. Heißgetränkzubereitungsmaschine (1) nach einem der vorangehenden Ansprüche, **gekennzeichnet durch** ein Sieb (18), das im Inneren der Brühkammer (5) angeordnet ist und in den Getränkerohmaterial gegeben wird, wobei seine Basis perforiert konfiguriert ist, und das dafür sorgt, dass das Getränk an den Topf (7) übertragen wird, indem die Getränkerohmaterialpartikel gesiebt werden.

## Revendications

1. Une machine de préparation de boissons chaudes (1) comprenant;
- un corps (2),
- un réservoir d'eau (3) dans lequel l'eau est remplie,
- un dispositif de chauffage d'eau (4) qui permet le chauffage de l'eau dans le réservoir d'eau (3),
- une chambre de préparation (5) dans laquelle la matière première de la boisson à préparer est placée et vers laquelle l'eau chauffée dans le réservoir d'eau (3) est transférée et dans laquelle le processus de préparation est réalisé en raison de l'interaction entre l'eau et la matière première de la boisson,
- un logement (6) qui est situé sur le corps (2) sous la chambre de préparation (5)
- un pot (7) dont la surface supérieure est au moins partiellement ouverte, qui est placé dans le logement (6), et auquel la boisson préparée dans la chambre de préparation (5) est transférée,
- une plate-forme (8) positionnée de manière à être à côté de la chambre de préparation (5) et du pot (7) qui sont positionnés l'un sur l'autre sur le corps (2), sur laquelle le réservoir d'eau (3) est placé, permettant au réservoir d'eau (3) d'être maintenu à côté de la chambre de préparation (5) et du pot (7),
- un mécanisme de transfert (9) qui permet le transfert de l'eau chauffée dans le réservoir d'eau (3) à la chambre de préparation (5) tandis que le réservoir d'eau (3) est sur la plate-forme (8),
- une unité de commande (10) qui est disposée sur le corps (2) entre la chambre de préparation (5) et le pot (7), permettant la commande des processus de préparation de boisson et/ou informant l'utilisateur de l'état relatif à la préparation de boissons,
- un connecteur (13) qui est disposé sur la plate-forme (8) et qui permet le transfert de l'énergie au réservoir d'eau (3) pour le chauffage de l'eau dans le réservoir d'eau (3), où le réservoir d'eau (3) présente une poignée (15) qui lui permet d'être saisi par l'utilisateur pour soulever à partir de la plate-forme (8) et un orifice (16) qui permet à l'eau d'être versée lorsque l'on veux l'utiliser séparément pour le but de servir en l'enlevant à partir de la plate-forme (8).

2. Une machine de préparation de boissons chaudes (1) selon la Revendication 1, **caractérisé par** l'unité de commande (10) comprenant au moins un bouton (11) permettant la commande des processus de préparation de boisson.

3. Une machine de préparation de boissons chaudes (1) selon la Revendication 1 ou 2, **caractérisé par** l'unité de commande (10) comprenant au moins un dispositif d'affichage (12) permettant à l'utilisateur d'être informé de l'état relatif à la préparation de boisson.

4. Une machine de préparation de boissons chaudes (1) selon l'une quelconque des revendications précédentes, **caractérisée par** un couvercle (14) qui permet l'accès dans la chambre de préparation (5).

5. Une machine de préparation de boissons chaudes (1) selon l'une quelconque des revendications précédentes, **caractérisée par** un dispositif de chauffage de pot (17) qui assure que la boisson dans le pot (7) est maintenue chaude.

6. Une machine de préparation de boissons chaudes (1) selon l'une quelconque des revendications précédentes, **caractérisée par** une passoire (18) qui est placée dans la chambre de préparation (5) dans laquelle la matière première de la boisson est placé, dont la base est perforée, permettant le transfert de la boisson au pot (7) en filtrant les particules de la matière première de la boisson.
